# EUROPEAN PATENT APPLICATION

(11) **EP 3 971 782 A2**
(43) Date of publication of application: **23.03.2022**
(21) Application number: 21191346.2
(22) Date of filing: 13.08.2021
(51) Int. Cl.: G06N 3/04, G06N 3/08

(54) **NEURAL NETWORK SELECTION**

(30) Priority: 18.09.2020 US 202017025379
(71) Applicant: Arm Cloud Technology, Inc., San Jose, CA 95134-1358 (US)
(72) Inventor: O'CONNOR, Mark John, San Jose, 95134-1358 (US); NAVARRO, Ramon Matas, San Jose, 95134-1358 (US)
(74) Representative: TLIP Limited

(57) **Abstract**

A computer-implemented method of identifying a neural network for processing data includes: clustering a training dataset (103) into a plurality of data clusters (104₁₋ₙ) based on similarities in activation patterns generated in neurons of a teacher neural network (105) in response to inputting the training dataset (103) into the teacher neural network (105), training a student neural network (106₁₋ₙ) for processing each of the plurality of data clusters (104₁₋ₙ), and providing a data classifier neural network (107) for identifying one or more of the trained student neural networks (106₁₋ₙ) to process data based on a data cluster of the data.

## Description

### BACKGROUND

### Field of the Invention

The present disclosure relates to a computer-implemented method of identifying a neural network for processing data. A related non-transitory computer-readable storage medium, a system, and a device, are also disclosed.

### Description of the Related Technology

Neural networks are employed in a wide range of applications such as image classification, speech recognition, character recognition, image analysis, natural language processing, gesture recognition and so forth. Many different types of neural network such as Convolutional Neural Networks "CNN", Recurrent Neural Networks "RNN", Generative Adversarial Networks "GAN", and Autoencoders have been developed and tailored to such applications.

Neurons are the basic unit of a neural network. A neuron has one or more inputs and generates an output based on the input(s). The value of data applied to each input(s) is typically multiplied by a "weight" and the result is summed. The summed result is input into an "activation function" in order to determine the output of the neuron. The activation function also has a "bias" that controls the output of the neuron by providing a threshold to the neuron's activation. The neurons are typically arranged in layers, which may include an input layer, an output layer, and one or more hidden layers arranged between the input layer and the output layer. The weights determine the strength of the connections between the neurons in the network. The weights, the biases, and the neuron connections are examples of "trainable parameters" of the neural network that are "learnt", or in other words, capable of being trained, during a neural network "training" process. Another example of a trainable parameter of a neural network, found particularly in neural networks that include a normalization layer, is the (batch) normalization parameter(s). During training, the (batch) normalization parameter(s) are learnt from the statistics of data flowing through the normalization layer.

A neural network also includes "hyperparameters" that are used to control the neural network training process. Depending on the type of neural network concerned, the hyperparameters may for example include one or more of: a learning rate, a decay rate, momentum, a learning schedule and a batch size. The learning rate controls the magnitude of the weight adjustments that are made during training. The batch size is defined herein as the number of data points used to train a neural network model in each iteration. Together, the hyperparameters and the trainable parameters of the neural network are defined herein as the "parameters" of the neural network.

The process of training a neural network includes adjusting the weights that connect the neurons in the neural network, as well as adjusting the biases of activation functions controlling the outputs of the neurons. There are two main approaches to training: supervised learning and unsupervised learning. Supervised learning involves providing a neural network with a training dataset that includes input data and corresponding output data. The training dataset is representative of the input data that the neural network will likely be used to analyse after training. During supervised learning the weights and the biases are automatically adjusted such that when presented with the input data, the neural network accurately provides the corresponding output data. The input data is said to be "labelled" or "classified" with the corresponding output data. In unsupervised learning the neural network decides itself how to classify or generate another type of prediction from a training dataset that includes un-labelled input data based on common features in the input data by likewise automatically adjusting the weights, and the biases. Semi-supervised learning is another approach to training wherein the training dataset includes a combination of labelled and un-labelled data. Typically the training dataset includes a minor portion of labelled data. During training the weights and biases of the neural network are automatically adjusted using guidance from the labelled data.

Whichever training process is used, training a neural network typically involves inputting a large training dataset, and making numerous of iterations of adjustments to the neural network parameters until the trained neural network provides an accurate output. As may be appreciated, significant processing resources are typically required in order to perform training. Training is usually performed using a Graphics Processing Unit "GPU" or a dedicated neural processor such as a Neural Processing Unit "NPU" or a Tensor Processing Unit "TPU". Training therefore typically employs a centralized approach wherein cloud-based or mainframe-based neural processors are used to train a neural network. Following its training with the training dataset, the trained neural network may be deployed to a device for analysing new data; a process termed "inference". Inference may be performed by a Central Processing Unit "CPU", a GPU, an NPU, on a server, or in the cloud.

However, there remains a need to provide improved neural networks.

### SUMMARY

According to a first aspect of the present disclosure, there is provided a computer-implemented method of identifying a neural network for processing data.

The method includes:
- clustering a training dataset into a plurality of data clusters based on similarities in activation patterns generated in neurons of a teacher neural network in response to inputting the training dataset into the teacher neural network;
- training a student neural network for processing each of the plurality of data clusters, by, for each data cluster, inputting data from the data cluster into a student neural network and into the teacher neural network, and optimising parameters of the student neural network based on the output of the teacher neural network; and
- providing a data classifier neural network for identifying one or more of the trained student neural networks to process data based on a data cluster of the data.

According to a second aspect of the present disclosure, providing a data classifier neural network, comprises:
- inputting the training dataset into the data classifier neural network, and training the data classifier neural network to identify each data cluster in the training dataset based on the corresponding data cluster provided by the clustering.

A non-transitory computer-readable storage medium, a system, and a device, are provided in accordance with other aspects of the disclosure. The functionality disclosed in relation to the computer-implemented method may also be implemented in the non-transitory computer-readable storage medium, and in the system, and in the device, in a corresponding manner.

Further features and advantages of the disclosure will become apparent from the following description of preferred implementations of the disclosure, given by way of example only, which is made with reference to the accompanying drawings.

### BRIEF DESCRIPTION OF THE DRAWINGS

Fig. 1 is a schematic diagram illustrating an example neural network.
Fig. 2 is a schematic diagram illustrating an example neuron.
Fig. 3 is a flowchart illustrating a first example of a method of identifying a neural network for processing data, in accordance with some aspects of the present disclosure.
Fig. 4 is a schematic diagram illustrating a system 100 for carrying-out the first example of a method, in accordance with some aspects of the present disclosure.
Fig. 5 is a flowchart illustrating a second example of a method of identifying a neural network for processing data, in accordance with some aspects of the present disclosure.
Fig. 6 is a schematic diagram illustrating a system 100 for carrying-out the second example of a method, in accordance with some aspects of the present disclosure.
Fig. 7 is a flowchart illustrating a third example of a method of identifying a neural network for processing data, in accordance with some aspects of the present disclosure.
Fig. 8 is a flowchart illustrating additional optional features of the third example of a method of identifying a neural network.
Fig. 9 is a flowchart illustrating a fourth example of a method of identifying a neural network for processing data, in accordance with some aspects of the present disclosure.
Fig. 10 is a flowchart illustrating a fifth example of a method of identifying a student neural network 106_{1..n} for processing data, in accordance with the present disclosure.
Fig. 11 is a schematic diagram illustrating a device 110 for carrying-out the fifth example of a method, in accordance with some aspects of the present disclosure.

### DETAILED DESCRIPTION OF CERTAIN INVENTIVE EMBODIMENTS

Examples of the present application are provided with reference to the following description and the figures. In this description, for the purposes of explanation, numerous specific details of certain examples are set forth. Reference in the specification to "an example", "an implementation" or similar language means that a feature, structure, or characteristic described in connection with the example is included in at least that one example. It is also to be appreciated that features described in relation to one example may also be used in another example and that all features are not necessarily duplicated for the sake of brevity. For instance, features described in relation to a computer-implemented method may be implemented in a system, and in a device, in a corresponding manner.

In the present disclosure, reference is made to examples of a neural network in the form of a Deep Feed Forward neural network. It is however to be appreciated that the disclosed method is not limited to use with this particular neural network architecture, and that the method may be used with other neural network architectures, such as for example a CNN, a RNN, a GAN, an Autoencoder, and so forth. Reference is also made to operations in which the neural network processes input data in the form of image data, and uses the image data to generate output data in the form of a predicted classification. It is to be appreciated that these example operations serve for the purpose of explanation only, and that the disclosed method is not limited to use in classifying image data. The disclosed method may be used to generate predictions in general, and the method may process other forms of input data such as audio data, motion data, vibration data, video data, text data, numerical data, financial data, light detection and ranging "LiDAR" data, and so forth.

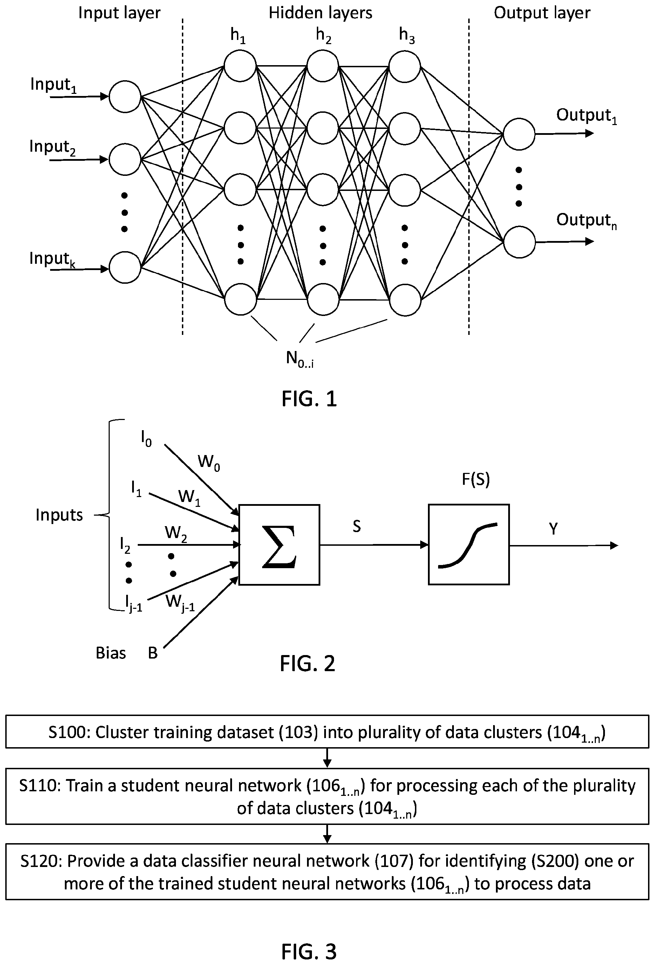

Fig. 1 is a schematic diagram illustrating an example neural network. The example neural network in Fig. 1 is a Deep Feed Forward neural network that includes neurons arranged in an Input layer, three Hidden layers h₁ - h₃, and an Output layer. The example neural network in Fig. 1 receives input data in the form of numeric or binary input values at the inputs, Input₁ - Inputₖ, of neurons in its Input layer, processes the input values by means of the neurons in its Hidden layers, h₁ - h₃, and generates output data at the outputs, Outputs_{1..n}, of neurons in its Output layer. The input data may for instance represent image data, or audio data and so forth. Each neuron in the Input layer represents a portion of the input data, such as for example a pixel of an image. For some neural networks, the number of neurons in the Output layer depends on the number of predictions the neural network is programmed to perform. For regression tasks such as the prediction of a currency exchange rate this may be a single neuron. For a classification task such as classifying images as one of cat, dog, horse, etc. there is typically one neuron per classification class in the output layer.

As illustrated in Fig. 1, the neurons of the Input layer are coupled to the neurons of the first Hidden layer h₁. The neurons of the Input layer pass the un-modified input data values at their inputs, Input₁ - Inputₖ, to the inputs of the neurons of the first Hidden layer h₁. The input of each neuron in the first Hidden layer h₁ is therefore coupled to one or more neurons in the Input layer, and the output of each neuron in the first Hidden layer h₁ is coupled to the input of one or more neurons in the second Hidden layer h₂. Likewise, the input of each neuron in the second Hidden layer h₂ is coupled to the output of one or more neurons in the first Hidden layer h₁, and the output of each neuron in the second Hidden layer h₂ is coupled to the input of one or more neurons in the third Hidden layer h₃. The input of each neuron in the third Hidden layer h₃ is therefore coupled to the output of one or more neurons in the second Hidden layer h₂, and the output of each neuron in the third Hidden layer h₃ is coupled to one or more neurons in the Output layer.

Fig. 2 is a schematic diagram illustrating an example neuron. The example neuron illustrated in Fig. 2 may be used to provide the neurons in hidden layers h₁ - h₃ of Fig. 1, as well as the neurons in the output layer of Fig. 1. As mentioned above, the neurons of the Input layer typically pass the un-modified input data values at their inputs, Input₁ - Inputₖ, to the inputs of the neurons of the first Hidden layer h₁. The example neuron in Fig. 2 includes a summing portion labelled with a sigma symbol, and an activation function labelled with an S-shaped symbol. In operation, data inputs I₀ - Iⱼ₋₁ are multiplied by corresponding weights w₀ - wⱼ₋₁ and summed, together with the bias value B. The intermediate output value S is inputted to the activation function F(S) to generate neuron output Y. The activation function acts as a mathematical gate and determines how strongly the neuron should be activated at its output Y based on its input value S. The activation function typically also normalizes its output Y, for example to a value of between 0 and 1, or between -1 and +1. Various activation functions may be used, such as a Sigmoid function, a Tanh function, a step function, Rectified Linear Unit "ReLU", Softmax and Swish function.

Variations of the example Feed Forward Deep neural network described above with reference to Fig. 1 and Fig. 2 that are used in other types of neural networks may for instance include the use of different numbers of neurons, different numbers of layers, different types of layers, different connectivity between the neurons and the layers, and the use of layers and/ or neurons with different activation functions to that exemplified above with reference to Fig. 1 and Fig. 2. For example, a convolutional neural network includes additional filter layers, and a recurrent neural network includes neurons that send feedback signals to each other. However, as described above, a feature common to neural networks is that they include multiple "neurons", which are the basic unit of a neural network.

As outlined above, the process of training a neural network includes automatically adjusting the above-described weights that connect the neurons in the neural network, as well as the biases of activation functions controlling the outputs of the neurons. In supervised learning, the neural network is presented with (training) input data that has a known classification. The input data might for instance include images of animals that have been classified with an animal "type", such as cat, dog, horse, etc. In supervised learning, the training process automatically adjusts the weights and the biases, such that when presented with the input data, the neural network accurately provides the corresponding output data. The neural network may for example be presented with a variety of images corresponding to each class. The neural network analyses each image and predicts its classification. A difference between the predicted classification and the known classification, is used to "backpropagate" adjustments to the weights and biases in the neural network such that the predicted classification is closer to the known classification. The adjustments are made by starting from the output layer and working backwards in the network until the input layer is reached. In the first training iteration the initial weights and biases, of the neurons are often randomized. The neural network then predicts the classification, which is essentially random. Backpropagation is then used to adjust the weights and the biases. The teaching process is terminated when the difference, or error, between the predicted classification and the known classification is within an acceptable range for the training data. In a later deployment phase, the trained neural network is presented with new images without any classification. If the training process was successful, the trained neural network accurately predicts the classification of the new images.

Various algorithms are known for use in the backpropagation stage of training. Algorithms such as Stochastic Gradient Descent "SGD", Momentum, Adam, Nadam, Adagrad, Adadelta, RMSProp, and Adamax "optimizers" have been developed specifically for this purpose. Essentially, the value of a loss function, such as the mean squared error, or the Huber loss, or the cross entropy, is determined based on a difference between the predicted classification and the known classification. The backpropagation algorithm uses the value of this loss function to adjust the weights and biases. In SGD, for example, the derivative of the loss function with respect to each weight is computed using the activation function and this is used to adjust each weight.

With reference to Fig. 1 and Fig. 2, therefore, training the neural network in Fig. 1 includes adjusting the weights w₀ - wⱼ₋₁, and the bias value B applied to the exemplary neuron of Fig. 2, for the neurons in the Hidden layers h₁ - h₃ and in the Output layer. The training process is computationally complex and therefore cloud-based, or server-based, or mainframe-based processing systems that employ dedicated neural processors are typically employed. During training of the neural network in Fig. 1, the parameters of the neural network, or more specifically the weights and the biases, are adjusted via the aforementioned backpropagation procedure such that a difference between the known classification and the classification generated at Output₁ - Outputₙ of the neural network in response to inputting training data into the student neural network, satisfies a stopping criterion. In other words, the training process is used to optimise the parameters of the neural network, or more specifically the weights and the biases. In supervised learning, the stopping criterion is that the difference between the output data generated at Output₁ - Outputₙ, and the label(s) of the input data, is within a predetermined margin. For example, if the input data includes images of cats, and that a definite classification of a cat is represented by a probability value of unity at Output₁, the stopping criterion might be that the for each input cat image the neural network generates a value of greater than 75 % at Output₁. In unsupervised learning, a stopping criterion might be that a self-generated classification that determined by the neural network itself based on commonalities in the input data, likewise generates a value of greater than 75 % at Output₁. Alternative stopping criteria may also be used in a similar manner during training.

After a neural network such as that described with reference to Fig. 1 and Fig. 2 has been trained, the neural network is deployed. New data is then input to the neural network during inference. The new input data is then classified by the neural network, or in other words, predictions are made thereupon. The processing requirements during inference are significantly less than those required during training, allowing the neural network to be deployed to a variety of systems such as laptop computers, tablets, mobile phones and so forth. In order to further alleviate the processing requirements of the system on which the neural network is deployed, further optimisation techniques may also be carried out. Such techniques make further changes to the parameters of the neural network in order to optimise its performance, and include a process termed compression.

Compression is defined herein as pruning and/or weight clustering and/or quantisation and/or performing a neural architecture search. Pruning a neural network is defined herein as the removal of one or more connections in a neural network. Pruning involves removing one or more neurons from the neural network, or removing one or more connections defined by the weights of the neural network. This may involve removing one or more of its weights entirely, or setting one or more of its weights to zero. Pruning permits a neural network to be processed faster due to the reduced number of connections, or due to the reduced computation time involved in processing zero value weights. Quantisation of a neural network involves reducing a precision of one or more of its weights or biases. Quantization may involve reducing the number of bits that are used to represent the weights - for example from 32 to 16, or changing the representation of the weights from floating point to fixed point. Quantization permits the quantized weights to be processed faster, or by a less complex processor. Weight clustering in a neural network involves identifying groups of shared weight values in the neural network and storing a common weight for each group of shared weight value. Weight clustering permits the weights to be stored with less bits, and reduces the storage requirements of the weights as well as the amount of data transferred when processing the weights. Each of the above-mentioned compression techniques act independently to accelerate or otherwise alleviate the processing requirements of the neural network. Examples techniques for pruning, quantization and weight clustering are described in a document by Han, Song et al. (2016) entitled "Deep Compression: Compressing Deep Neural Networks with Pruning, Trained Quantization and Huffman Coding", arXiv:1510.00149v5, published as a conference paper at ICLR 2016. Another form of compression is to perform a neural architecture search. This involves training several neural networks having different architectures, and selecting the neural network that has the best performance. The performance may for example be defined in terms of processing throughput time, memory requirements, or another criterion.

A key factor affecting the performance of a neural network during inference is the training dataset that was used to train the neural network. A neural network programmer typically tries to provide a training dataset that provides a trained neural network that is neither under-fitted, nor over-fitted for the data classes it is intended to classify during inference. An under-fitted neural network results from the use of a training dataset that is too general for the intended data classes, and leads to inaccurate classifications during inference. An over-fitted neural network results from the use of a training dataset that is too specific to the intended data classes, and leads to inaccurate classifications of data that differs significantly from the training dataset. Increasing the size of the training dataset such that it encompasses a broad range of classes, with multiple specific examples within each class, can lead to impractical training period and/or a complex neural network model that has impractical processing requirements.

The inventors have found an improved method of identifying a neural network for processing data. The method may be used to provide a neural network such as the Deep Feed Forward neural network described above with reference to Fig. 1, or a neural network with another architecture.

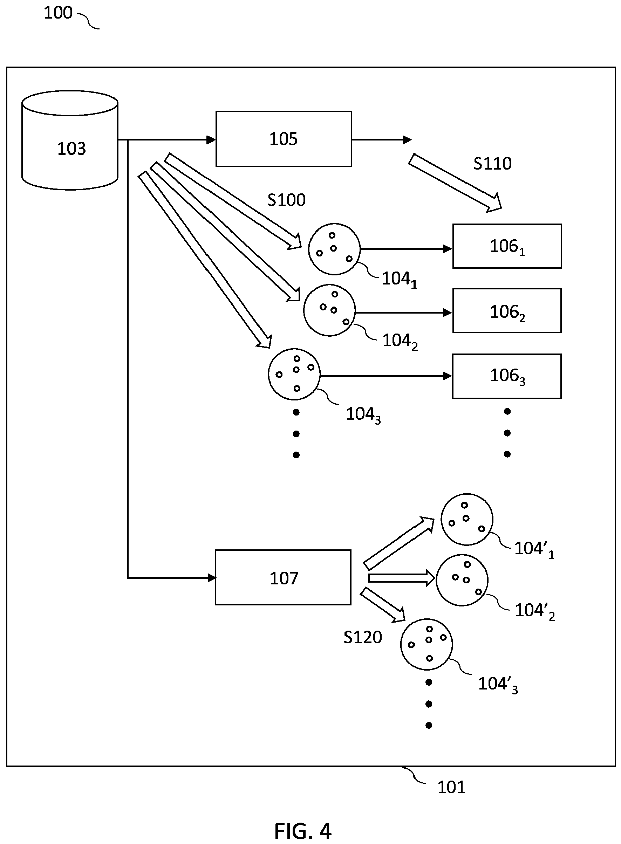

Fig. 3 is a flowchart illustrating a first example of a method of identifying a neural network for processing data, in accordance with some aspects of the present disclosure, and Fig. 4 is a schematic diagram illustrating a system 100 for carrying-out the first example of a method, in accordance with some aspects of the present disclosure. With reference to Fig. 4, the system 100 includes a first processing system 101, a training dataset 103, a teacher neural network 105, multiple student neural networks 106_{1.n}, and a data classifier neural network 107. The first processing system 101 includes one or more processors (not illustrated) that execute instructions, which when executed by the one or more processors carry out the method described below. The system 100 in Fig. 4 may include one or more computer readable storage media (not illustrated) that are in communication with the one or more processors and which store the instructions, the training dataset 103, and other data in accordance with the methods described below. The first processing system 101 may be a cloud-based processing system or a server-based processing system or a mainframe-based processing system, and in some examples its one or more processors may include one or more neural processors or neural processing units "NPU", one or more CPUs or one or more GPUs. It is also contemplated that the first processing system 101 may be provided by a distributed computing system and that some aspects of the method such as the clustering operation S100, and the provision of a data classifier neural network S120 may be provided by a cloud-based processing system or a server-based processing system or a mainframe-based processing system, and that other aspects of the method such as training operation S110 may be performed at least in-part by an edge computing device, or by a client device processing system or by a remote device processing system or by a mobile device-based processing system.

With reference to Fig. 3 and Fig. 4, a first example of a computer-implemented method of identifying a neural network for processing data includes:
- clustering S100 a training dataset 103 into a plurality of data clusters 104_{1..n} based on similarities in activation patterns generated in neurons of a teacher neural network 105 in response to inputting the training dataset 103 into the teacher neural network 105;
- training S110 a student neural network 106_{1..n} for processing each of the plurality of data clusters 104_{1..n}, by, for each data cluster 104_{1..n}, inputting data from the data cluster into a student neural network 106_{1..n} and into the teacher neural network 105, and optimising parameters of the student neural network 106_{1..n} based on the output of the teacher neural network 105; and
- providing S120 a data classifier neural network 107 for identifying S200 one or more of the trained student neural networks 106_{1..n} to process data based on a data cluster 104_{1..n} of the data.

By clustering the training dataset 103, and using each data cluster 104_{1..n} to train a student neural network 106_{1..n} in the above manner, each trained neural network 106_{1..n} is well-suited to performing inference with data that is similar to that from its data cluster 104_{1..n}. By providing a data classifier neural network 107 that is able to identify one or more of the student neural networks 106_{1..n} to process data based on data cluster of the data, the method may be used to select a student neural network 106_{1..n} to perform inference that is suited to the data.

With reference to Fig. 3 and Fig. 4, in operation S100, data clusters 104_{1..n} are generated by inputting a training dataset 103 into a teacher neural network 105, and clustering the training dataset 103 based on similarities in activation patterns in neurons of the teacher neural network. The training dataset 103 may include any type of data, such as, and without limitation, image data and/or audio data and/or vibration data and/or video data and/or text data and/or LiDAR data, and/or numerical data.

The teacher neural network 105 may be any neural network that is trained to classify data. The teacher neural network may for example be a Deep Feed Forward neural network such as that described with reference to Fig. 1, and which is trained to classify data in accordance with the methods mentioned above in relation to Fig. 1. The teacher neural network 105 may be provided by a supervised or an unsupervised or a semi-supervised learning process. The activation patterns represent values at the outputs of the neurons in one or more layers of the teacher neural network 105. The activation patterns may be in the output layer and/or one or more hidden, or "intermediate" layers of the teacher neural network 105. The activation patterns may optionally be aggregated across inputs and/or across features.

With reference to Fig. 1, if the neural network in Fig. 1 represents the teacher neural network 105, an example of an activation pattern is the output Output₁ in the Output layer. Training dataset data elements from training dataset 103 that generate a similar value at this Output₁ might define a data cluster 104_{1..n}. If the neurons in the Output layer employ a Binary step activation function, the outputs in the Output layer can have the value of logic 1 or logic 0. The term "similar" in this example of a Binary step activation function may be interpreted as "equal to". Thus, training dataset data elements from training dataset 103 that generate the same value of logic 1 at Output₁ might define a data cluster 104_{1..n}, and training dataset data elements from training dataset 103 that generate the same value of logic 0 at Output₁ might define another data cluster 104_{1..n}. Another example of an activation pattern is the outputs of the two neurons in the top row of hidden layers h₁ and h₃. Training dataset data elements from training dataset 103 that generate similar values at each of these outputs would define a data cluster 104_{1..n}. For example, training dataset data elements that generate a logic 1 at the output of the neuron in the top row of hidden layers h₁, and a logic 0 at the output of the neuron in the top row of hidden layers h₃, might define a data cluster 104_{1..n}. If, instead of the activation functions in the example neural network of Fig. 1 employing a Binary step activation function, another activation function were used that gives rise to an analogue output value, such as a Tanh activation function that may have an analogue output value in the range (-1, 1), the term "similar" is to be interpreted as "close to". In this case, training dataset data elements from training dataset 103 that generate similar analogue values at one or more outputs of the example teacher neural network provided by Fig. 1, may likewise define data clusters 104_{1..n}. Similar training dataset data elements tend to have similarities in their activation patterns, i.e. the values at the outputs of one or more (intermediate and/or output) layers of the teacher neural network 105. These similarities may be detected and used to cluster the data that is inputted to the teacher neural network 105. These activation patterns and activation functions serve only as examples, and other activation patterns and activation functions may alternatively be used.

Various distance metrics may be used in operation S100 to determine similarities in the activation patterns in order to assign each training dataset data element to a data cluster 104_{1..n}. Distance metrics such as the sum of absolute difference "SAD", the Sum of Squared Difference "SSD", the Mean-Absolute Error "MAE", the Mean-Squared Error "MSE", the Minkowski Distance, the Euclidean Distance, and so forth may be used.

In some examples, the training datsaset 103 includes a plurality of groups of data elements, each group having a source label identifying an origin of the data elements in the group. In these examples the clustering operation S100 comprises combining the groups of data elements to provide the data clusters 104_{1..n} based on similarities in the activation patterns generated in the neurons of the teacher neural network 105 in response to inputting the data elements of each group into the teacher neural network 105. By way of a few non-limiting examples, if the training dataset 103 includes audio data from multiple speakers, the data elements might represent the words spoken by the speakers, and the source label might represent the speaker, i.e. the origin of the data elements. The words spoken by one speaker might be grouped and labelled with the source label A, i.e. representing speaker A, and the words spoken by another speaker might be grouped and labelled with the source label B, i.e. representing speaker B. In the clustering operation S100, the words spoken by each speaker would be inputted to the teacher neural network 105. The activation patterns of the words spoken by speaker A would then be collected together, and compared with the activation patterns of the words spoken by speaker B. If the activation patterns are similar, perhaps because the speakers have a similar accent, the group of words spoken by speaker A would be combined with the words spoken by speaker B to provide a data cluster, e.g. data cluster 104₁. Groups of words spoken by another speaker, e.g. speaker C, would be added to the data cluster 104₁ if they also have similar activation patterns to the activation patterns of the words spoken by speaker A and speaker B. Further data clusters 104_{2..n} would also be generated based on the same principles by likewise combining, from the training dataset 103, the groups of words spoken by further speakers. In this example, the clustering S100 provides a way of generating the data clusters 104_{1..n} using the source labels. The clustering operation S100 results in clusters of words spoken by speakers whose voices activate the teacher neural network 105 in similar ways, and might, for example results in a data cluster representing Scottish accents, a data cluster representing Australian accents, and so forth. Using the source labels in combination with the neural network's activation patterns to define the data clusters 104_{1..n}, in this manner therefore influences the selection of data that is used to train each student neural network 106_{1..n}. Consequently, a student network that is trained on one of the clusters may be simpler, or more accurate, in analyzing data that is similar to the data in that specific cluster than a neural network that is trained on the same amount of data from multiple clusters. In another example, if the training dataset 103 includes image data, the data elements would be the images, and the source label might represent a location of the images, e.g. a country, a county, a zip code, etc. In this example, the clustering operation S100 results in data clusters that include images from a plurality of locations, wherein the images within a data cluster activate the teacher neural network in similar ways. It might, for example, result in a data cluster 104₁ with zip codes for city areas, another data cluster 104₂ with zip codes for beaches, another data cluster 104₃ with zip codes for party areas, another data cluster 104₄ with zip codes for famous statues, and so forth. In another example, if the training dataset 103 includes video data from an autonomous vehicle camera, a source label of the data might be a country in which the car is being driven. In this example, the clustering operation S100 would cluster the video data from different countries together, and might for example result in data clusters of video data wherein each cluster includes video data from countries having a similar climate. Other source labels may alternatively be provided, and their data elements combined based on the same principles in clustering operation S100 in order to provide the data clusters 104_{1..n}. It is noted that source labels may in general be provided manually, e.g. by a user classification process, or automatically, e.g. as a property of the data collection process, and include e.g. timestamps, location stamps, user identifiers, IP geolocation data, and so forth.

In operation S110, each of a plurality of student neural networks 106_{1..n} are then trained using the teacher neural network 105. The student neural networks may be any type of neural network. In some examples the student neural networks have an architecture similar to or the same as those described above with reference to Fig. 1. The student neural networks may have a similar architecture to, or the same architecture as the teacher neural network 105, or they may indeed have a different architecture.

Each student neural network 106_{1..n} is associated with a data cluster, and trained by inputting the data from the data cluster into the student neural network 106_{1..n}. In one example, the student neural network 106_{1..n} is trained by using the corresponding output that is obtained by inputting the data for its data cluster into the teacher neural network 105. The training of each student neural network 106_{1..n} in this example involves optimising parameters of the student neural network based on the output of the teacher neural network 105. In another example, the training dataset 103 includes labelled data, and the student neural network 106_{1..n} is trained using the labels of the data in the data cluster. The training of each student neural network 106_{1..n} in this example involves optimising parameters of the student neural network 106_{1..n} based on a corresponding label of the data in the data cluster. The parameters of the student neural network that are optimised in this process may include the weights, the biases, the neuron connections, and the (batch) normalization parameter(s), or in other words the "trainable parameters" of the student neural network. In more detail, in some examples, optimising the parameters of the student neural network 106_{1..n} based on the output of the teacher neural network 105, comprises adjusting parameters of the student neural network 106_{1..n} until a loss function based on a difference between the output of the student neural network 106_{1..n} and the output of the teacher neural network 105, satisfies a stopping criterion. The stopping criterion may for example be that the difference between the output generated by the teacher neural network 105 and the output of the student neural network, is within a predetermined margin. Various loss functions may be used for this purpose, including the mean squared error, the Huber loss, or the cross entropy.

In operation S120, a data classifier neural network 107 is provided for identifying S200 one or more of the trained student neural networks 106_{1..n} to process data based on a data cluster 104_{1..n} of the data. Using the above example of training data 103 in the form of audio data from multiple speakers, if the data classifier neural network 107 generates data clusters that represent e.g. Scottish accents, the operation S120 identifies a student neural network that is suited to processing audio data with Scottish accents, as the student neural network for processing the data.

In one example, providing S120 a data classifier neural network 107, comprises: inputting the training dataset 103 into the data classifier neural network 107, and training the data classifier neural network 107 to identify each data cluster 104_{1..n} in the training dataset 103 based on the corresponding data cluster 104_{1..n} provided by the clustering S100. The training of the data classifier neural network 107 to identify each data cluster 104_{1..n} in the training dataset 103, may include adjusting parameters of the data classifier neural network 107 until a loss function based on a difference between the output of the data classifier neural network 107 and the corresponding data cluster 104_{1..n} provided by the clustering S100, satisfies a stopping criterion. The stopping criterion may for example be that the difference between the output of the data classifier neural network 107 and the corresponding data cluster 104_{1..n} provided by the clustering S100, is within a predetermined margin. Various loss functions may be used for this purpose, including the mean squared error, the Huber loss, or the cross entropy.

In the first example of the method described above, the various operations, including the clustering S100 a training dataset 103, and the training S110 a student neural network 106_{1..n}, and the providing S120 a data classifier neural network 107, and the training the data classifier neural network 107, may, as illustrated in Fig. 4, be performed using one or more processors of the first processing system 101.

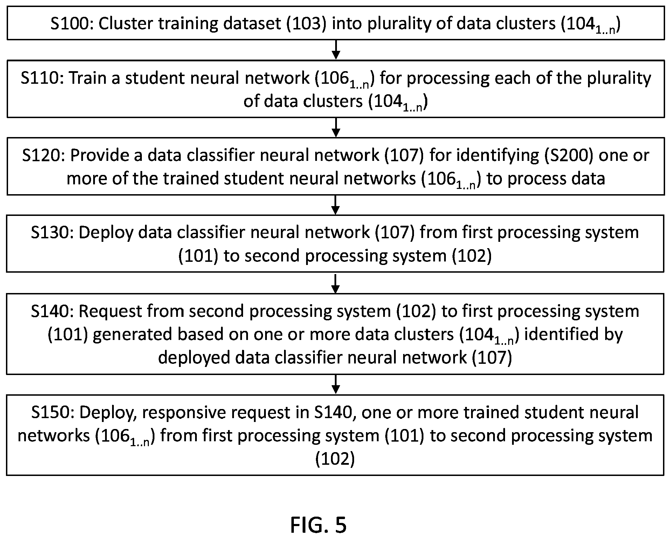

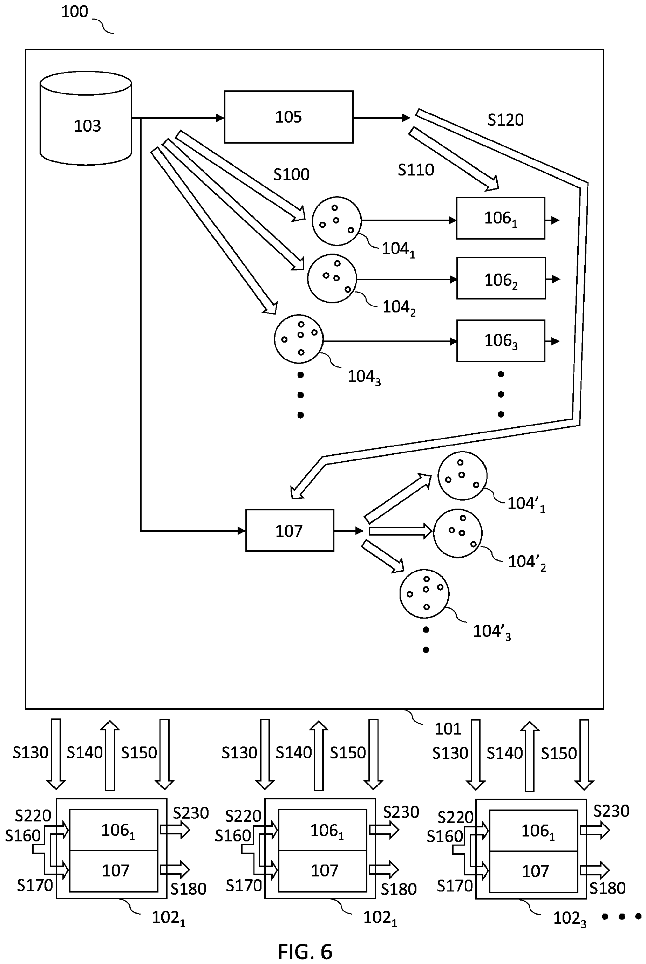

Fig. 5 is a flowchart illustrating a second example of a method of identifying a neural network for processing data, in accordance with some aspects of the present disclosure, and Fig. 6 is a schematic diagram illustrating a system 100 for carrying-out the second example of a method, in accordance with some aspects of the present disclosure. The method illustrated in the flowchart of Fig. 5 includes the operations S100, S110, S120 that were described above with reference to Fig. 3, and additionally includes the operations S130, S140, and S150 that relate to deploying the data classifier neural network 107 from the first processing system 101, to a second processing system 102_{1..k}. The system 100 illustrated in Fig. 6 corresponds to system 100 in Fig. 4, and includes the first processing system 101 from Fig. 4, as well as a plurality of second processing systems 102_{1..k}. Each second processing system 102_{1..k} in Fig. 6 includes one or more processors (not illustrated) that execute instructions, which when executed by the one or more processors carry out the method described below. Each second processing system 102_{1..k} in Fig. 6 may include one or more computer readable storage media (not illustrated) that are in communication with the one or more processors of the second processing system 102_{1..k} and which store the instructions. Each second processing system 102_{1..k} may be a client device processing system or a remote device processing system or a mobile device-based processing system, and in some examples its one or more processors may include one or more neural processors. Each second processing system 102_{1..k} may for example be, or be included within a so-called edge computing device or an Internet of Things "IOT" device, such as a laptop computer, a tablet, a mobile telephone, or a "Smart appliance" such as a smart doorbell, a smart fridge, a home assistant, a security camera, a sound detector, or a vibration detector, or an atmospheric sensors, or an "autonomous device" such as a vehicle, or a drone, or a robot and so forth.

In addition to the operations described above in relation to the first example method, the second example of a method of identifying a neural network for processing data includes the operations:
- deploying S130, using the one or more processors of the first processing system 101, the data classifier neural network 107 from the first processing system 101 to one or more processors of a second processing system 102_{1..k}; and/or
- deploying S150, using the one or more processors of the first processing system 101, and responsive a request S140 from the one or more processors of the second processing system 102_{1..k} generated based on one or more data clusters 104_{1..n} identified by the deployed data classifier neural network 107, one or more of the trained student neural networks 106_{1..n} from the first processing system 101 to the one or more processors of the second processing system 102_{1..k}, for processing data received by the one or more processors of the second processing system 102_{1..k}.

In one example, both deploying operations S130 and S150 are carried out. In another example, the second processing system may receive the data classifier neural network 107, or the one or more of the trained student neural networks 106_{1..n} via another means. For example the second processing system may be pre-installed with the data classifier neural network 107 or the one or more trained student neural networks 106_{1..n}. Alternatively, the second processing system may receive the data classifier neural network 107 or the one or more trained student neural networks 106_{1..n} from another source, such as via the internet, from a computer-readable storage medium, and so forth. The data classifier neural network 107 may be executed intermittently in order to deploy neural networks that are suited to the data clusters 104_{1..n} that are received by the second processing system 102_{1..k}, thereby permitting it to accurately perform inference when there are changes in the type of data that is processed by the second processing system. In so doing, in the second example method, the first processing system 101 deploys to each second processing system 102_{1..k}, a student neural network 106_{1..n} that is suited to the data clusters 104_{1..n} that are received by the second processing system 102_{1..k}. The second example method may therefore provide a more accurate classification of the data clusters 104_{1..n} that are received by the second processing system 102_{1..k}. The second example method permits each second processing system 102_{1..k} to operate in a secure manner. Each second processing system 102_{1..k} requests a student neural network for performing inference on data without necessarily having to send to the data on which the inference is performed to the first processing system 101. The method may therefore be used to manage the updating, and deployment of neural networks to the second processing systems 102_{1..k} with neural networks that are suited to the data in which each second processing system 102_{1..k} performs inference, in a secure way.

The deployment of the neural networks in operations S130 and S150 may take place by any means of data communication, including via wired and wireless data communication, and may be via the internet, an ethernet, or by transferring the data by means of a portable computer-readable storage medium such as a USB memory device, an optical or magnetic disk, and so forth.

The deployment of the neural networks in operations S130 and S150 in accordance with the second example method is illustrated in the system 100 of Fig. 6. In-use, in operation S130 the data classifier neural network 107 is deployed to a second processing system such as second processing systems 102₁. The second processing system 102₁ receives data that is representative of the data that will subsequently be processed by, or is currently being processed by, a neural network operating on the second processing system 102₁. The received data is input into the deployed data classifier neural network 107 in order to identify one or more data clusters 104_{1..n} that the second processing system 102₁ may be used to process. In operation S140, a request is generated based on one or more data clusters 104_{1..n} identified by the deployed data classifier neural network 107. The request is sent from the one or more processors of the second processing system 102₁ to the first processing system 101. In operation S150, in response to the request in operation S140, the one or more processors of the first processing system 101 deploy one or more of the trained student neural networks 106_{1..n} from the first processing system 101 to the one or more processors of the second processing system 102, in order to process data received by the one or more processors of the second processing system 102₁.

The received data may be any type of data, such as image data and/or audio data and/or vibration data and/or video data and/or text data and/or LiDAR data, and/or numerical data. In some examples, the second processing system 102₁ records a history of data clusters 104_{1..n} that are identified by the deployed data classifier neural network 107. The history may be recorded and stored in one or more computer-readable storage media in communication with the processor(s) of the second processing system 102₁. The history is representative of the data clusters 104_{1..n} that a neural network operating on the second processing system 102₁ will likely be used to process. In operation S140, the request is made to the first processing system 101, for the first processing system 101 to deploy to the second processing system 102₁, one or more of the student neural networks depending on the history of data clusters 104_{1..n}. As an example, the second processing system 102₁ may identify through its recorded history of data clusters that a neural network is likely to be used to analyse the data cluster "human faces". Consequently, the second processing system may request, in operation S140, that first processing system deploys, in operation S150, a student neural network 106_{1..n} that is trained on the data cluster "human faces". In so doing, the first processing device 101 deploys one or more neural networks that are suited to the data clusters 104_{1..n} that the second processing system 102₁ will likely be used to process. Each second processing systems 102_{1..k} illustrated in Fig. 6 operates in the same manner as described for second processing systems 102₁, one or more student neural networks 106_{1..n} being deployed to the second processing systems 102_{1..k} that are suited to the data clusters 104_{1..n} that these second processing system 102_{1..k} will likely be used to process, or are currently being used to process.

One or more additional processes may also be carried out in the second example method. For example, in the second example method, the deployed data classifier neural network 107 and/or each trained student neural network 106_{1..n} may be compressed prior to deployment. The second example method may therefore include compressing, using one or more processors of the first processing system 101, the data classifier neural network 107 and/or each trained student neural network 106_{1..n}, such that the one or more processors of the first processing system 101 deploy the compressed data classifier neural network 107 to the one or more processors of the second processing system 102, and/or such that responsive the request S140 from the one or more processors of the second processing system 102, the one or more processors of the first processing system 101 deploy S150 the one or more compressed trained student neural networks 106_{1..n} to the one or more processors of the second processing system 102, respectively. The compression may include performing a neural architecture search and/or pruning and/or weight clustering and/or quantisation of the respective neural network.

The compressing operation may reduce the bandwidth required by the deployment, and/or alleviate the processing requirements of the deployed data classifier neural network 107 and trained student neural network 106_{1..n}.

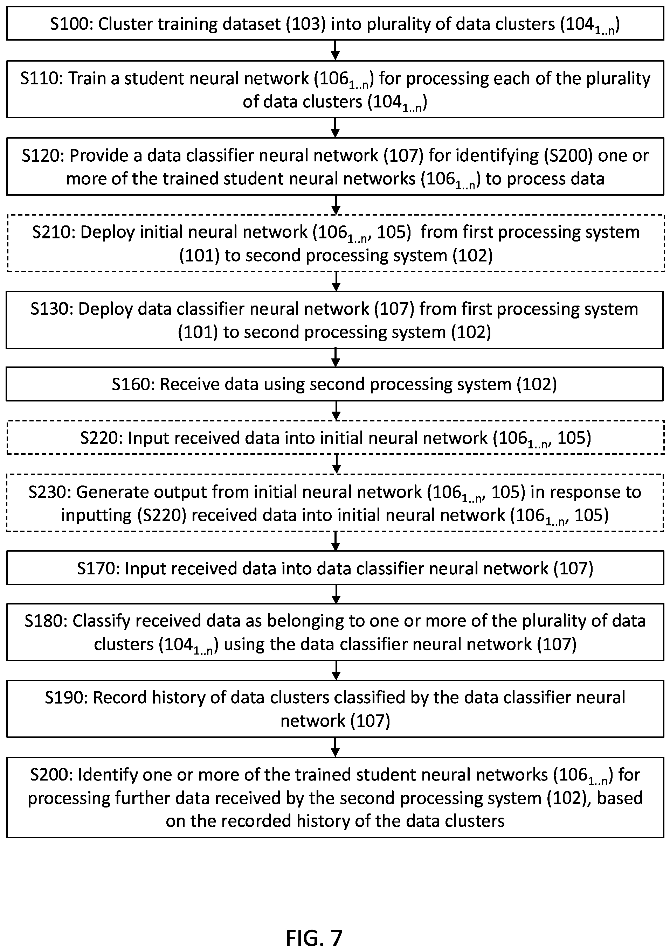

Fig. 7 is a flowchart illustrating a third example of a method of identifying a neural network for processing data, in accordance with some aspects of the present disclosure. The method illustrated in Fig. 7 may be carried out using the system illustrated in Fig. 6. The flowchart in Fig. 7 includes operations S100, S110, S120 that were described above with reference to the first example of Fig. 3, and additionally includes operations S130, S160, S170, S180, S190, and S200. Optional operations S210, S220 and S230 that may also be carried out in the third example are illustrated in Fig. 7 by way of their dashed outlines. With reference to Fig. 7, the operations S100, S110, and S120, are performed using one or more processors of a first processing system 101 as described above in relation to Fig. 6. In addition to the operations described in relation to Fig. 3, the third example of a method of identifying a neural network for processing data includes:
- deploying S130, using the one or more processors of the first processing system 101, the data classifier neural network 107 from the first processing system 101 to one or more processors of a second processing system 102_{1..k}; and
- receiving data S160, using the one or more processors of the second processing system 102_{1..k};
- inputting S170, using the one or more processors of the second processing system 102_{1..k}, the received data into the data classifier neural network 107;
- classifying S180, using the one or more processors of the second processing system 102_{1..k}, the received data as belonging to one or more of the plurality of data clusters 104_{1..n} using the data classifier neural network 107;
- recording S190, using the one or more processors of the second processing system 102_{1..k}, a history of the data clusters classified by the data classifier neural network 107; and
- identifying S200, using the one or more processors of the second processing system 102_{1..k}, one or more of the trained student neural networks 106_{1..n} for processing further data received by the one or more processors of the second processing system 102_{1..k}, based on the recorded history of the data clusters classified by the data classifier neural network 107.

With reference to Fig. 6, and Fig. 7, in the third example, in operation S130 the data classifier neural network 107 is deployed to a second processing system 102_{1..k} such as second processing system 102₁, and in operation S160 the second processing system 102₁ receives data. The received data is representative of the data that will subsequently be processed by, or is currently being processed by, a neural network operating on the second processing system 102₁. The received data may be any type of data, such as image data and/or audio data and/or vibration data and/or video data and/or text data and/or LiDAR data, and/or numerical data. The data may be received using any form of data communication, such as wired and wireless data communication, and may be via the internet, an ethernet, or by transferring the data by means of a portable computer-readable storage medium such as a USB memory device, an optical or magnetic disk, and so forth. In some examples the data is received from a sensor such as a camera, a microphone, a motion sensor, a temperature sensor, a vibration sensor, and so forth. In some examples the sensor may be included within a device that includes the second processing system 102₁.

In operation S170 the received data is inputted into the data classifier neural network 107. In operation S180 the received data is classified as belonging to one or more of the data clusters 104_{1..n} using the data classifier neural network 107. In operation S190, a history of the data clusters classified by the data classifier neural network 107 is recorded. The history may be recorded on a computer-readable storage medium in communication with the processor(s) of the second processing system 102₁. In operation S200, one or more of the trained student neural networks 106_{1..n} are identified for processing further data received by the one or more processors of the second processing system 102₁, based on the recorded history of the data clusters classified by the data classifier neural network 107.

Operation S200 results in the identification of a student neural network that is suited to processing the data cluster(s) that the second processing system 102₁ is expected to process. The other example second processing systems 1022..k illustrated in Fig. 6 operate in a similar manner, student neural networks being deployed to each of these second processing systems 102_{2..k} that are likewise suited to the data clusters that they are expected to process.

The optional operations of the third example method that are illustrated with dashed outlines in Fig. 7 are now described. The third example method may also include operations S210, S220 and S230, i.e.:
- deploying S210, using the one or more processors of the first processing system 101, an initial neural network 106_{1..n}, 105 from the first processing system 101 to the one or more processors of the second processing system 102_{1..k};
- inputting S220, using the one or more processors of the second processing system 102_{1..k}, the received data into the initial neural network 106_{1..n}, 105; and
- generating S230, using the one or more processors of the second processing system 102_{1..k}, an output from the initial neural network 106_{1..n}, 105 in response to the inputting S220 the received data into the initial neural network 106_{1..n}, 105;

In on example, in the optional operation S210, the initial neural network 106_{1..n}, 105 that is deployed is a trained student neural network 106_{1..n}. In another example the initial neural network 106_{1..n}, 105 that is deployed in the optional operation S210 is the teacher neural network 105. Another neural network may alternatively be deployed in S210 to use as the initial neural network. The deployed initial neural network 106_{1..n}, 105 may be used to perform inference on the received data whilst the data classifier neural network 107 determines which of the trained student neural networks 106_{1..n} to identify for processing further data received by the second processing system 102₁.

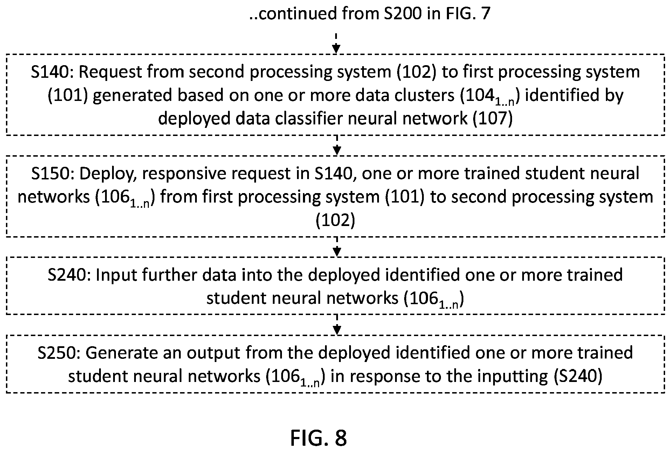

Fig. 8 is a flowchart illustrating additional optional features of the third example of a method of identifying a neural network. In the third example, the operation S200, may optionally include operation S140 of sending a request from the one or more processors of the second processing system 102_{1..k} to the one or more processors of the first processing system 101 such that the first processing system 101 deploys S150 the identified one or more trained student neural networks 106_{1..n} to the one or more processors of the second processing system 102_{1..k}. In so doing, the identified one or more trained student neural networks is provided to the second processing system 102₁ for processing the further data.

The third example method may also include:
- inputting S240, using the one or more processors of the second processing system 102_{1..k}, the further data into the deployed identified one or more trained student neural networks 106_{1..n}; and
- generating S250, using the one or more processors of the second processing system 102_{1..k}, an output from the deployed identified one or more trained student neural networks 106_{1..n} in response to the inputting S240 the further data into the deployed identified one or more trained student neural networks 106_{1..n}.

The student neural network that is deployed in this manner may be periodically updated in the same manner in order to ensure that the second processing system 102₁ continues to process data with a suitable neural network. This may improve the accuracy of the inference performed with the second processing system 102₁, particularly when there is a change to the data that is typically inputted to the second processing system 102₁.

Optionally, the initial neural network 106_{1..n}, 105 and/or the data classifier neural network 107 and/or each trained student neural network 106_{1..n} may be compressed using the processor(s) of the first processing system 101 prior to their deployment to the second processing system 102₁ in operations S210, S130, S150. The compression may include performing a neural architecture search and/or pruning and/or weight clustering and/or quantisation of the respective neural network.

As mentioned above with reference to the example methods, various example systems are also provided for performing the method steps described above. With reference to Fig. 4, a first example of a system 100 for identifying a neural network for processing data, includes a first processing system 101 comprising one or more processors configured to carry out a method comprising:
- clustering S100 a training dataset 103 into a plurality of data clusters 104_{1..n} based on similarities in activation patterns generated in neurons of a teacher neural network 105 in response to inputting the training dataset 103 into the teacher neural network 105;
- training S110 a student neural network 106_{1..n} for processing each of the plurality of data clusters 104_{1..n}, by, for each data cluster 104_{1..n}, inputting data from the data cluster into a student neural network 106_{1..n} and into the teacher neural network 105, and optimising parameters of the student neural network 106_{1..n} based on the output of the teacher neural network 105; and
- providing S120 a data classifier neural network 107 for identifying S200 one or more of the trained student neural networks 106_{1..n} to process data based on a data cluster 104_{1..n} of the data.

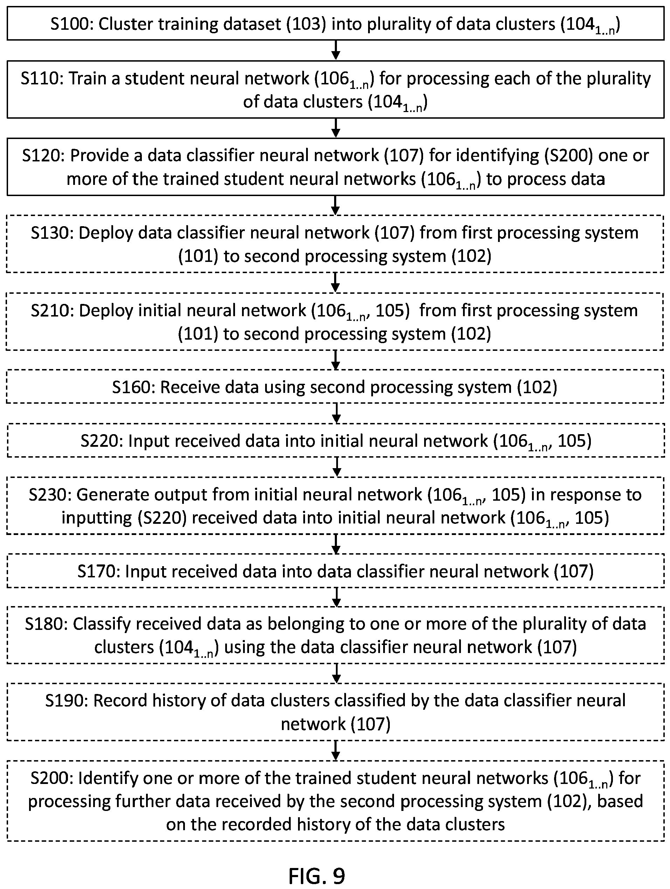

The method steps carried out by the first example system are also illustrated in Fig. 9, which is a flowchart illustrating a fourth example of a method of identifying a neural network for processing data, in accordance with some aspects of the present disclosure. Various optional method steps may additionally be carried out by the first example system, as illustrated via the dashed outlines in the flowchart of Fig. 9.

With reference to Fig. 9 and Fig. 6, a second example of a system 100 for identifying a neural network for processing data, includes a first processing system 101 and a second processing system 102_{1..k} comprising one or more processors. In the second example system, the one or more processors of the first processing system 101 operate in the same manner as described above for the first example system and additionally deploy S130 the data classifier neural network 107 from the first processing system 101 to the one or more processors of the second processing system 102_{1..k}. The one or more processors of the second processing system 102_{1..k} carry out a method comprising:
- receiving data S160;
- inputting S170 the received data to the data classifier neural network 107;
- classifying S180 the received data as belonging to one or more of the plurality of data clusters 104_{1..n} using the data classifier neural network 107;
- recording S190 a history of the data clusters classified by the data classifier neural network 107; and
- identifying S200 one or more of the trained student neural networks 106_{1..n} for processing further data received by the one or more processors of the second processing system 102_{1..k}, based on the recorded history of the data clusters classified by the data classifier neural network 107.

Any of the method features described above in relation to the example methods may also be carried out by the first example system or the second example system in a corresponding manner, such as for example S220 and S230 in Fig. 9. The method operations illustrated in the flowchart of Fig. 8 may also be carried out by the first example system or the second example system.

In accordance with a fifth example method, a method for use with a second processing system 102_{1..k} is provided. The second processing system 102_{1..k} may for example be, or be included within a so-called "edge computing" device or an Internet of Things "IOT" device, such as a laptop computer, a tablet, a mobile telephone, or a "Smart appliance" such as a smart doorbell, a smart fridge, a home assistant, a security camera, a sound detector, or a vibration detector, or an atmospheric sensors, or an "Autonomous device" such as a vehicle, or a drone, or a robot and so forth.

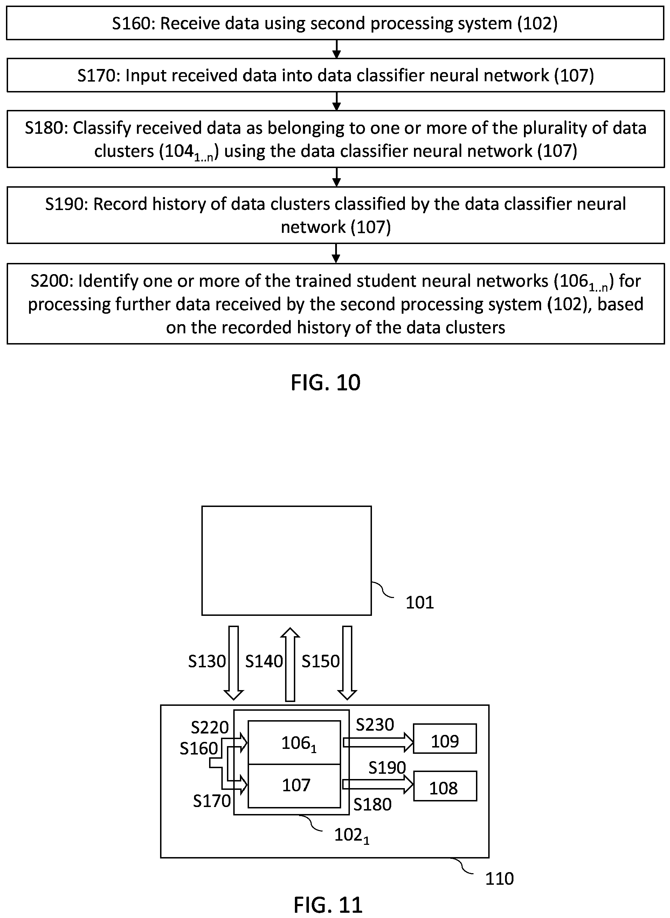

The fifth example method is described with reference to Fig. 10, which is a flowchart illustrating a fifth example of a method of identifying a student neural network 106_{1..n} for processing data, in accordance with the present disclosure. Fig. 10 includes operations S160, S170, S180, S190, and S200 that were described above in relation to the second processing system.

In the fifth example method, a computer-implemented method of identifying, from a plurality of student neural networks 106_{1..n} trained by clustering S100 a training dataset 103 into a plurality of data clusters 104_{1..n} based on similarities in activation patterns generated in neurons of a teacher neural network 105 in response to inputting the training dataset 103 into the teacher neural network 105, and by, for each data cluster 104_{1..n}, inputting data from the data cluster into a student neural network 106_{1..n} and into the teacher neural network 105, and optimising parameters of the student neural network 106_{1..n} based on the output of the teacher neural network 105; a student neural network 106_{1..n} for processing data using one or more processors of a second processing system 102_{1..k} based on a data cluster 104_{1..n} of the data identified by a data classifier neural network 107 trained by inputting the training dataset 103 into the data classifier neural network 107, and training the data classifier neural network 107 to identify each data cluster 104_{1..n} in the training dataset 103 based on the corresponding data cluster 104_{1..n} provided by the clustering S100. The method comprises:
- receiving data S160, using the one or more processors of the second processing system 102_{1..k};
- inputting S170, using the one or more processors of the second processing system 102_{1..k}, the received data into the data classifier neural network 107;
- classifying S180, using the one or more processors of the second processing system 102_{1..k}, the received data as belonging to one or more of the plurality of data clusters 104_{1..n} using the data classifier neural network 107;
- recording S190, using the one or more processors of the second processing system 102_{1..k}, a history of the data clusters classified by the data classifier neural network 107; and
- identifying S200, using the one or more processors of the second processing system 102_{1..k}, one or more of the trained student neural networks 106_{1..n} for processing further data received by the one or more processors of the second processing system 102_{1..k}, based on the recorded history of the data clusters classified by the data classifier neural network 107.

The fifth example method may optionally also include the steps of:
- requesting, using the one or more processors of the second processing system 102_{1..k}, the identified one or more of the trained student neural networks 106_{1..n} from the first processing system 101;
- receiving the requested identified one or more of the trained student neural networks 106_{1..n} from the first processing system 101;
- receiving further data, using the one or more processors of the second processing system 102_{1..k};
- inputting, using the one or more processors of the second processing system 102_{1..k}, the further data into the requested identified one or more of the trained student neural networks 106_{1..n}; and
- generating, using the one or more processors of the second processing system 102_{1..k}, an output from the requested identified one or of the more trained student neural networks 106_{1..n} in response to the inputting the further data into the requested identified one or more trained student neural networks 106_{1..n}.

The operations in the fifth example method correspond to those described for the examples above. Fig. 11 is a schematic diagram illustrating a device 110 for carrying-out the fifth example of a method, in accordance with some aspects of the present disclosure. The device 110 includes a second processing system 102₁ which carries out the fifth example method. Device 110 may also include one or more non-transitory storage media 108, a display 109, and one or more sensors (not illustrated) such as a camera, a microphone, a motion sensor, a temperature sensor, a vibration sensor, and so forth camera for generating data that is processed by the second processing system 102₁. The data may alternatively be received using any form of data communication, such as wired and wireless data communication, and may be via the internet, an ethernet, or by transferring the data by means of a portable computer-readable storage medium such as a USB memory device, an optical or magnetic disk, and so forth. Fig. 11 also illustrates the first processing system 101, which is in communication with the second processing system 102₁ by means of e.g. a wired or wireless communication.

With reference to Fig. 11, a device 110 for identifying, from a plurality of student neural networks 106_{1..n} trained by clustering S100 a training dataset 103 into a plurality of data clusters 104_{1..n} based on similarities in activation patterns generated in neurons of a teacher neural network 105 in response to inputting the training dataset 103 into the teacher neural network 105, and by, for each data cluster 104_{1..n}, inputting data from the data cluster into a student neural network 106_{1..n} and into the teacher neural network 105, and optimising parameters of the student neural network 106_{1..n} based on the output of the teacher neural network 105; a student neural network 106_{1..n} for processing data using one or more processors based on a data cluster 104_{1..n} of the data identified by a data classifier neural network 107 trained by inputting the training dataset 103 into the data classifier neural network 107, and training the data classifier neural network 107 to identify each data cluster 104_{1..n} in the training dataset 103 based on the corresponding data cluster 104_{1..n} provided by the clustering S100; includes one or more processors configured to execute a method comprising:
- receiving data S160;
- inputting S170 the received data into the data classifier neural network 107;
- classifying S180 the received data as belonging to one or more of the plurality of data clusters 104_{1..n} using the data classifier neural network 107;
- recording S190 a history of the data clusters classified by the data classifier neural network 107; and
- identifying S200 one or more of the trained student neural networks 106_{1..n} for processing further data received by the one or more processors 102_{1..k}, based on the recorded history of the data clusters classified by the data classifier neural network 107.

One or more non-transitory storage media 108 may be used to store in instructions to carry out the method and/ or to store the history of data clusters 104_{1..n} classified by the data classifier neural network 107. The additional method steps described in relation to the fifth example method may also be carried out by the device 110.

Examples of the above-described methods may be provided by a non-transitory computer-readable storage medium comprising a set of computer-readable instructions stored thereon which, when executed by at least one processor, cause the at least one processor to perform the method. In other words, examples of the above-described methods may be provided by a computer program product. The computer program product can be provided by dedicated hardware or hardware capable of running the software in association with appropriate software. When provided by a processor, these operations can be provided by a single dedicated processor, a single shared processor, or multiple individual processors that some of the processors can share. Moreover, the explicit use of the terms "processor" or "controller" should not be interpreted as exclusively referring to hardware capable of running software, and can implicitly include, but is not limited to, digital signal processor "DSP" hardware, GPU hardware, NPU hardware, read only memory "ROM" for storing software, random access memory "RAM", NVRAM, and the like. Furthermore, implementations of the present disclosure can take the form of a computer program product accessible from a computer usable storage medium or a computer readable storage medium, the computer program product providing program code for use by or in connection with a computer or any instruction execution system. For the purposes of this description, a computer-usable storage medium or computer-readable storage medium can be any apparatus that can comprise, store, communicate, propagate, or transport a program for use by or in connection with an instruction execution system, apparatus, or device. The medium can be an electronic, magnetic, optical, electromagnetic, infrared, or semiconductor system or device or device or propagation medium. Examples of computer readable media include semiconductor or solid state memories, magnetic tape, removable computer disks, random access memory "RAM", read only memory "ROM", rigid magnetic disks, and optical disks. Current examples of optical disks include compact disk-read only memory "CD-ROM', optical disk-read/write "CD-R/W", Blu-RayTM, and DVD

The above example implementations are to be understood as illustrative examples of the present disclosure. Further implementations are also envisaged. For example, implementations described in relation to a method may also be implemented in a computer program product, in a computer readable storage medium, in a system, or in a device. It is therefore to be understood that a feature described in relation to any one implementation may be used alone, or in combination with other features described, and may also be used in combination with one or more features of another of the implementation, or a combination of other the implementations. Furthermore, equivalents and modifications not described above may also be employed without departing from the scope of the disclosure, which is defined in the accompanying claims. Any reference signs in the claims should not be construed as limiting the scope of the disclosure.

## Claims

1. A computer-implemented method of identifying a neural network for processing data, the method comprising:
clustering a training dataset into a plurality of data clusters based on similarities in activation patterns generated in neurons of a teacher neural network in response to inputting the training dataset into the teacher neural network;
training a student neural network for processing each of the plurality of data clusters; and
providing a data classifier neural network for identifying one or more of the trained student neural networks to process data based on a data cluster of the data.

2. The computer-implemented method according to claim 1, wherein the training a student neural network for processing each of the plurality of data clusters comprises: i) for each data cluster, inputting data from the data cluster into a student neural network and into the teacher neural network, and optimising parameters of the student neural network based on the output of the teacher neural network, or ii) for each data cluster, inputting data from the data cluster into a student neural network and optimising parameters of the student neural network based on a corresponding label of the data.

3. The computer-implemented method according to claim 1, wherein the providing a data classifier neural network, comprises: inputting the training dataset into the data classifier neural network, and training the data classifier neural network to identify each data cluster in the training dataset based on the corresponding data cluster provided by the clustering;
optionally wherein the clustering a training dataset, and wherein the training a student neural network, and wherein the providing a data classifier neural network, and wherein the training the data classifier neural network, are performed using one or more processors of a first processing system; and/or
optionally wherein the training the data classifier neural network to identify each data cluster in the training dataset, comprises adjusting parameters of the data classifier neural network until a loss function based on a difference between the output of the data classifier neural network and the corresponding data cluster provided by the clustering, satisfies a stopping criterion.

4. The computer-implemented method according to claim 1, wherein the clustering a training dataset, and wherein the training a student neural network, and wherein the providing a data classifier neural network, are performed using one or more processors of a first processing system, and comprising:
deploying, using the one or more processors of the first processing system, the data classifier neural network from the first processing system to one or more processors of a second processing system; and/or
deploying, using the one or more processors of the first processing system, and responsive a request from the one or more processors of the second processing system generated based on one or more data clusters identified by the deployed data classifier neural network, one or more of the trained student neural networks from the first processing system to the one or more processors of the second processing system, for processing data received by the one or more processors of the second processing system.

5. The computer-implemented method according to claim 4, comprising compressing, using one or more processors of the first processing system, the data classifier neural network and/or each trained student neural network, such that the one or more processors of the first processing system deploy the compressed data classifier neural network to the one or more processors of the second processing system, and/or such that responsive the request from the one or more processors of the second processing system, the one or more processors of the first processing system deploy the one or more compressed trained student neural networks to the one or more processors of the second processing system, respectively.

6. The computer-implemented method according to claim 1, wherein the clustering a training dataset, and wherein the training a student neural network, and wherein the providing a data classifier neural network, are performed using one or more processors of a first processing system, and comprising:
deploying, using the one or more processors of the first processing system, the data classifier neural network from the first processing system to one or more processors of a second processing system; and
receiving data, using the one or more processors of the second processing system;
inputting, using the one or more processors of the second processing system, the received data into the data classifier neural network;
classifying, using the one or more processors of the second processing system, the received data as belonging to one or more of the plurality of data clusters using the data classifier neural network;
recording, using the one or more processors of the second processing system, a history of the data clusters classified by the data classifier neural network; and
identifying, using the one or more processors of the second processing system, one or more of the trained student neural networks for processing further data received by the one or more processors of the second processing system, based on the recorded history of the data clusters classified by the data classifier neural network;
optionally wherein the initial neural network is provided by a trained student neural network, or wherein the initial neural network is provided by the teacher neural network.

7. The computer-implemented method according to claim 6, comprising:
deploying, using the one or more processors of the first processing system, an initial neural network from the first processing system to the one or more processors of the second processing system;
inputting, using the one or more processors of the second processing system, the received data into the initial neural network; and
generating, using the one or more processors of the second processing system, an output from the initial neural network in response to the inputting the received data into the initial neural network;
and/or
wherein the identifying, comprises sending a request from the one or more processors of the second processing system to the one or more processors of the first processing system such that the first processing system deploys the identified one or more trained student neural networks to the one or more processors of the second processing system; and
inputting, using the one or more processors of the second processing system, the further data into the deployed identified one or more trained student neural networks; and
generating, using the one or more processors of the second processing system, an output from the deployed identified one or more trained student neural networks in response to the inputting the further data into the deployed identified one or more trained student neural networks.

8. The computer-implemented method according to claim 7, comprising compressing, using the one or more processors of the first processing system, the initial neural network and/or the data classifier neural network and/or each trained student neural network, such that the first processing system deploys the compressed initial neural network to the one or more processors of the second processing system, and/or such that the first processing system deploys the compressed data classifier neural network to the one or more processors of the second processing system, and/or such that in response to the sending a request from the one or more processors of the second processing system to the one or more processors of the first processing system, the first processing system deploys the identified one or more compressed trained student neural networks to the one or more processors of the second processing system, respectively;
optionally wherein the compressing the initial neural network and/or the data classifier neural network and/or each trained student neural network, comprises performing a neural architecture search and/or pruning and/or weight clustering and/or quantisation of the respective neural network.

9. The computer-implemented method according to claim 1, wherein the training dataset comprises a plurality of groups of data elements, each group having a source label identifying an origin of the data elements in the group, and wherein the clustering comprises combining the groups of data elements to provide the data clusters based on similarities in the activation patterns generated in the neurons of the teacher neural network in response to inputting the data elements of each group into the teacher neural network.

10. The computer-implemented method according to claim 1, wherein the optimising parameters of the student neural network based on the output of the teacher neural network, comprises adjusting parameters of the student neural network until a loss function based on a difference between the output of the student neural network and the output of the teacher neural network, satisfies a stopping criterion.

11. The computer-implemented method according to claim 1, wherein the first processing system is a cloud-based processing system or a server-based processing system or a mainframe-based processing system, and/ or wherein the second processing system is a client device processing system or a remote device processing system or a mobile device-based processing system.

12. A non-transitory computer-readable storage medium comprising instructions which when executed by one or more processors cause the one or more processors to carry out the method according to claim 1.

13. A system for identifying a neural network for processing data, the system comprising a first processing system comprising one or more processors configured to carry out a method comprising:
clustering a training dataset into a plurality of data clusters based on similarities in activation patterns generated in neurons of a teacher neural network in response to inputting the training dataset into the teacher neural network;
training a student neural network for processing each of the plurality of data clusters; and
providing a data classifier neural network for identifying one or more of the trained student neural networks to process data based on a data cluster of the data.

14. The system according to claim 13, comprising a second processing system comprising one or more processors, and wherein the method carried out by the one or more processors of the first processing system comprises deploying the data classifier neural network from the first processing system to the one or more processors of the second processing system, and wherein the one or more processors of the second processing system are configured to carry out a method comprising:
receiving data;
inputting the received data to the data classifier neural network;
classifying the received data as belonging to one or more of the plurality of data clusters using the data classifier neural network;
recording a history of the data clusters classified by the data classifier neural network; and
identifying one or more of the trained student neural networks for processing further data received by the one or more processors of the second processing system, based on the recorded history of the data clusters classified by the data classifier neural network.

15. A computer-implemented method of identifying, from a plurality of student neural networks trained by clustering a training dataset into a plurality of data clusters based on similarities in activation patterns generated in neurons of a teacher neural network in response to inputting the training dataset into the teacher neural network, and by, for each data cluster, inputting data from the data cluster into a student neural network and into the teacher neural network, and optimising parameters of the student neural network based on the output of the teacher neural network; a student neural network for processing data using one or more processors of a second processing system based on a data cluster of the data identified by a data classifier neural network trained by inputting the training dataset into the data classifier neural network, and training the data classifier neural network to identify each data cluster in the training dataset based on the corresponding data cluster provided by the clustering; the method comprising:
receiving data, using the one or more processors of the second processing system;
inputting, using the one or more processors of the second processing system, the received data into the data classifier neural network;
classifying, using the one or more processors of the second processing system, the received data as belonging to one or more of the plurality of data clusters using the data classifier neural network;
recording, using the one or more processors of the second processing system, a history of the data clusters classified by the data classifier neural network; and
identifying, using the one or more processors of the second processing system, one or more of the trained student neural networks for processing further data received by the one or more processors of the second processing system, based on the recorded history of the data clusters classified by the data classifier neural network.
